# EUROPÄISCHE PATENTSCHRIFT

(11) **EP 1 034 987 B1**
(45) Veröffentlichungstag und Bekanntmachung des Hinweises auf die Patenterteilung: **23.03.2005**
(21) Anmeldenummer: 00102595.6
(22) Anmeldetag: 08.02.2000
(51) Int. Cl.: B60R 21/13

(54) **Überroll-Schutzvorrichtung fÜr Kraftfahrzeuge**
Roll-over bar device for vehicles
Dispositif d'arceau de sécurité pour véhicules

(30) Priorität: 10.03.1999 DE 19910424
(43) Veröffentlichungstag der Anmeldung: 13.09.2000
(73) Patentinhaber: ISE Innomotive Systems Europe GmbH, 51702 Bergneustadt (DE)
(72) Erfinder: Schulte, Michael, 57462 Olpe (DE)
(74) Vertreter: Fuchs Mehler Weiss & Fritzsche

(56) Entgegenhaltungen:
- DE-A- 4 342 400
- DE-A- 19 712 955
- DE-C- 19 727 590

## Beschreibung

Die Erfindung bezieht sich auf eine Überroll-Schutzvorrichtung für Kraftfahrzeuge, mit einem im Überschlagfall ausfahrbaren Überrollkörper und einer Verklinkung zum Halten der ausgefahrenen Position, die ein drehbar angelenktes federvorgespanntes Verklinkungselement mit einem Glied für ein manuelles Lösen der Verklinkung aufweist.

Überroll-Schutzvorrichtungen für Kraftfahrzeuge, insbesondere für Cabriolets, weisen typischerweise einen Überrollkörper, beispielsweise einen U-förmigen Bügel oder einen breiten Profilkörper, auf, der im Überschlagfall aus einer abgesenkten Ruhelage in eine über die Fahrzeugbrüstung nach oben überstehende Stützlage selbstätig ausfahrbar ist. Als Ausfahrantrieb dient typischerweise eine Druckfeder, die in Wirkverbindung mit dem Überrollkörper steht, die in der Ruhelage vorgespannt ist und in dieser Stellung durch eine Auslöseanordnung gehalten wird.

Das Überroll-Schutzsystem weist typischerweise ferner eine Verklinkung auf, welche im Crashfall den Überrollkörper in seiner ausgefahrenen Stellung halten und ein Eindrücken des Überrollkörpers verhindern soll Diese Verklinkung muß dabei manuell lösbar sein, um ein manuelles Einschieben des ausgefahrenen Überrollkörpers gegen die Kraft der Antriebs-Druckfeder zu ermöglichen.

So zeigt die DE 43 42 400 A1 als Verklinkung einen Rastdorn mit übereinander liegenden umlaufenden Zahnsegmenten, der am Überrollkörper befestigt ist und eine mit Rastzähnen versehene Sperrklinke, die fahrzeugfest ist, und mittels Klinkenfedern in Wirkeingriff mit dem Rastdorn bringbar ist. Bei einer Aufwärtsbewegung des Überrollkörpers gleiten (ratschen) die abgeschrägten Flanken der Zähne des Rastdornes an den Rastzähnen der Sperrklinke vorbei, bis der Überrollkörper seine Endstellung erreicht. Bei einer Kraft von oben, wie sie z.B. typischerweise bei einem Überschlag auftritt, treffen dann senkrechte Flanken der Zähne aufeinander, so daß zwischen Rastdorn und Sperrklinke Formschluß besteht, der durch die Kraft verstärkt wird. Der Überrollkörper kann daher nicht eingedrückt werden.

Um ein manuelles Einschieben des Überrollkörpers nach dem Ende des Gefahrenzustandes oder nach einer ungewollten Auslösung zu ermöglichen, besitzt die federvorgespannte Sperrklinke einen angeformten manuell betätigbaren Schwenkhebel, der gegen die Federvorspannung eine Aufhebung der formschlüssigen Wirkverbindung zwischen den Zähnen des Rastdornes und der Sperrklinke ermöglicht, so daß der ausgefahrene Überrollkörper in seine Ausgangslage manuell zurückdrückbar ist.

Aus dem document DE 197 12 955 A1 ist eine Schutzvorrichtung nach dem Oberbegriff des Anspruchs 1 bekannt.

Eine vergleichbare Verklinkungs-Konstruktion zeigt die DE 195 23 790 A1. Mit dem Überrollkörper ist ein Zahnsegment (Zahnstange) vernietet, welches mit einer Rastklinke zusammenwirkt, die an einem Führungsblock fahrzeugfest schwenkbar angebracht ist. Sie wird von zwei Druck- oder Klinkenfedern derart beaufschlagt, daß ihre Zähne in der Grundstellung mit denjenigen des Zahnsegmentes im Wirkeingriff stehen. Auch hierbei ist durch die Formgebung der Zähne ein Ausfahren des Überrollkörpes nach oben jederzeit möglich, eine Bewegung des Überrollkörpers nach unten in der Grundstellung der Rastklinke jedoch gesperrt. An der Rastklinke ist ein Rasthebel angeformt, der manuell bedient werden kann, um die Zähne der Rastklinke mit denjenigen des Zahnsegmentes außer Wirkeingriff zu bringen, und um damit den ausgefahrenen Überrollkörper in seine Ausgangsstellung drücken zu können.

Um einen ausgefahrenen Überrollkörper in die Ausgangsstellung drücken zu können, muß einmal der Schwenkhebel der Sperrklinke bzw. der Rasthebel der Rastklinke gegen die Kraft der Klinkenfedern manuell betätigt und im betätigten Zustand gehalten werden, und es muß gleichzeitig der Überrollkörper bei betätigtem Schwenk- bzw. Rasthebel gegen die Kraft der Antriebs-Druckfedern eingedrückt werden. Ist nur eine Person vorhanden, muß daher eine Hand den Rast- bzw. Schwenkhebel und die andere Hand den Überrollkörper betätigen. Da der Kraftaufwand für das Hineindrücken des Überrollkörpers beträchtlich ist, ist das Zurückbringen des ausgefahrenen Überrollkörpers in die Ausgangsstellung gemäß dem Stand der Technik mit erheblichen Mühen verbunden.

Das gleiche gilt für die Verklinkungskonstruktion nach der DE 43 14 538 C 2 mit einer fahrzeugfest angebrachten gezahnten Rastleiste und einer mit dem Überrollkörper verbundenen Sperrklinke. Um die Verriegelung der Sperrklinke nach einem Ausfahren des Überrollbügels manuell lösen zu können, ist ein mit einem Handgriff versehener Schieber vorgesehen, der über eine schmale, entsprechend ausgebildete Öffnung von oben über die Zähne der Rastleiste geschoben werden kann und dabei die Sperrklinke von den Zähnen der Rastleiste abhebt. Auch hierbei muß der Handgriff während des manuellen Hineindrückens des ausgefahrenen Überrollbügels betätigt bleiben, d.h. das Hineindrücken kann ebenfalls nur mit einer Hand geschehen. Hinzu kommt der Nachteil, daß der entsprechende Schieber nicht in dem Überrollbügelsystem integriert ist, d.h. ein Zusatzteil darstellt. Dadurch muß ein entsprechender Bauraum für die Zugänglichkeit zum Einbringen des Zusatzteiles im Fahrzeug vorhanden sein. Wird nach einem manuellen Entsperren das Herausnehmen des Zusatzteiles vergessen, d.h. liegt eine Fehlbedienung vor, dann ist der Überrollbügel ohne Funktion, was ein erhebliches Sicherheitsrisiko darstellt.

Der Erfindung liegt die Aufgabe zugrunde, die eingangs bezeichnete Überroll-Schutzvorrichtung für Kraftfahrzeuge, mit einem im Überschlagfall ausfahrbaren Überrollkörper und einer Verklinkung zum Halten der ausgefahrenen Position, die ein drehbar angelenktes federvorgespanntes Verklinkungselement mit einem Glied für ein manuelles Lösen der Verklinkung aufweist, so auszubilden, daß das manuelle Hineindrücken eines ausgefahrenen Überrollkörpers in die Ausgangsstellung wesentlich erleichtert wird.

Die Lösung dieser Aufgabe gelingt gemäß der Erfindung dadurch, daß eine manuell betätigbare, mit einem Selbsthalte-Mechanismus ausgebildete Tastenanordnung vorgesehen ist, die in Wirkeingriff mit dem Glied am Verklinkungselement bringbar ist, derart, daß sie die Verklinkung in Selbsthaltung löst.

Durch die Selbsthaltung der Tastenanordnung bleibt die Verklinkung selbsthaltend entriegelt, so daß nunmehr beide Hände für ein Einschieben des Überrollkörpers in die Ausgangsposition zur Verfügung stehen, wodurch dieser Vorgang wesentlich erleichtert wird.

Diese Selbsthaltung kann auf einfache Weise gemäß einer Weiterbildung der Erfindung selbstätig aufgehoben werden, indem am Überrollkörper ein Betätigungselement zum Aufheben der Selbsthaltung bei einer vorgegebenen unteren Stellung des Überrollkörpers angebracht ist.

Für die Ausbildung der Tastenanordnung und des zugehörigen Selbsthaltemechanismus stehen dem Fachmann mehrere konstruktive Möglichkeiten zur Verfügung.

Eine besonders wirksame und dennoch einfache sowie sichere Selbsthaltung läßt sich gemäß einer Weiterbildung der Erfindung erzielen, wenn die Tastenanordnung eine in einem Gehäuse vertikal, federvorgespannt geführte Drucktaste mit einem länglichen Schaft aufweist, der in Wirkeingriff mit dem entriegelnden Glied am Verklinkungselement bringbar und an dem eine Nocke angebracht ist, und wenn der Selbsthaltemechanismus einen horizontal in dem Gehäuse federvorgespannt, verschiebbaren Sperrschieber mit einer Durchtrittsöffnung für den Schaft der Drucktaste und der daran angebrachten Nocke sowie mit entsprechenden Betätigungsschrägen aufweist, derart, daß beim Herunterdrücken der Drucktaste die Nocke mittels einer Schräge den Sperrschieber gegen die Federvorspannung verschiebt, bis die Nocke unterhalb des Sperrschiebers gelangt und diesen damit wieder unter Ausbildung einer Selbsthaltung der Drucktaste freigibt.

Die beschriebene selbsttätige Aufhebung der Selbsthaltung läßt sich mit einfachen Mitteln dabei erzielen, wenn am Sperrschieber eine äußere Schräge ausgebildet ist für den Wirkeingriff mit einer Schräge am Betätigungselement am Überrollkörper für die Aufhebung der Selbsthaltung bzw. wenn das Betätigungselement am Überrollkörper keilförmig ausgebildet ist.

Eine besondere Bedeutung kommt der Ausbildung der Drucktaste und des entsperrenden Gliedes am Verklinkungselement zu.

Eine besonders wirksame Entsperrung in Selbsthaltung ist gemäß einer Ausgestaltung der Erfindung möglich, wenn das untere Ende des Schaftes der Drucktaste eine Schräge für den Wirkeingriff mit dem Glied des Verklinkungselementes, das als Entsperrhebel ausgebildet ist, aufweist.

Die Federvorspannung der Drucktaste und des Sperrschiebers ist für eine sichere Selbsthaltung von Bedeutung. Eine einfache und wirksame Anordnung ergibt sich, wenn zwei Druckfedern für die Vorspannung der Drucktaste und zwei Druckfedern für die Vorspannung der Sperrklinke vorgesehen sind.

Weitere ausgestaltende Merkmale der Erfindung ergeben sich anhand eines in den Zeichnungen dargestellten Ausführungsbeispieles.

Es zeigen:
- Figur 1: in einer schematischen, teilweise geschnittenen Darstellung den Verklinkungsmechanismus für die Verriegelung des Überrollkörpers eines Überroll-Schutzsystems in der ausgefahrenen Stellung mit der erfindungsgemäßen entsperrenden Tastenanordnung mit Selbsthaltung,
- Figur 2: eine Darstellung entsprechend Figur 1, jedoch mit der Tastenanordnung in Selbsthaltung bei entklinktem Überrollköper,
- Figur 3: eine Darstellung entsprechend Figur 2, jedoch mit eingeschobenem Überrollbügel unmittelbar vor seinem Ausgangszustand mit selbsttätiger Aufhebung der Selbsthaltung des Tastenanordnung,
- Figur 4: eine Darstellung entsprechend Figur 3 mit vollständig aufgehobener Selbsthaltung, und
- Figur 5: in einer Explosionsdarstellung die wesentlichen Elemente der erfindungsgemäßen Tastenanordnung mit Selbsthaltemechanismus.

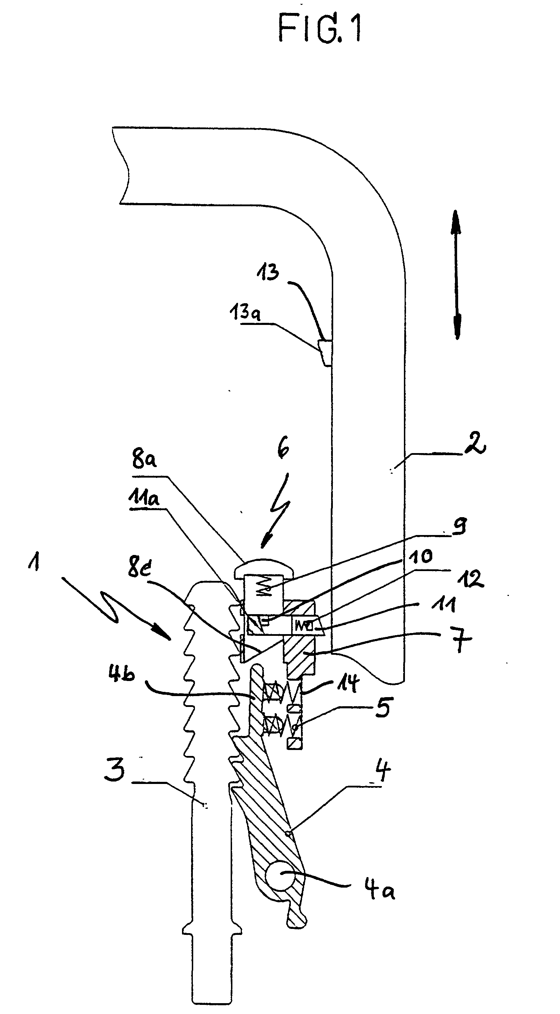

Die Zeichnung zeigt ein Überroll-Schutzsystem für Kraftfahrzeuge mit einer Verklinkung 1, die den ausgefahrenen Überrollkörper (Figur 1) in dieser Stellung hält und auf eine Weise ein manuelles Wiedereinbringen des ausgefahrenen Überrollkörpers in die Ausgangslage erlaubt. Der besseren Übersicht halber sind nur die wesentlichen Teile der Verklinkung 1 im Zusammenhang mit einem U-förmigen Überrollbügel 2 dargestellt. Die Verklinkung 1 wird, vergleichbar mit derjenigen nach der eingangs zitierten DE 43 42 400 A1, bei der dargestellten Ausführung durch einen Rastdorn 3, der mit dem Überrollbügel 2 in Verbindung steht, und durch eine mit dem Rastdorn 3 zusammenwirkende Rastklinke 4 gebildet, die schwenkbar um die Achse 4a, fahrzeugfest angelenkt ist. Die Rastklinke 4 besitzt an ihrem oberen Ende einen Schwenkhebel 4b, an dem zwei Druck-Klinkenfedern 5 angreifen und damit die Zähne des Rastdornes 3 und der Rastklinke 4 in Wirkeingriff bringen, wie in Figur 1 dargestellt. Der Überrollbügel 2 ist dann gegen eine Einfahrbewegung nach unten gesperrt.

Durch eine manuelle Verschwenkung des Schwenkhebels 4b im Uhrzeigersinn kann die Verklinkung gelöst werden, so daß der Überrollbügel 2 mit seinem Rastdorn 3 frei verschiebbar ist, und zwar gegen die Kraft von nicht dargestellten antreibenden Druckfedern beim Wiedereinschieben nach einer Auslösung.

Die dargestellte Verklinkung 1 ist nur als Ausführungsbeispiel zu sehen. Es sind Überroll-Schutzsysteme möglich, bei denen der Rastdorn fahrzeugfest und die Rastklinke mit dem Überrollbügel verbunden ist, sowie bei denen die Verklinkung durch andere Rastelemente wie Zahnstangen, Rasthebel oder dgl. gebildet wird.

Zur Erleichterung des vorgenannten Wiedereinschiebens des ausgefahrenen Überrollbügels sieht die Erfindung ein Komfort-Entriegelungssystem 6 der Rast- oder Sperrklinke 4 vor, das nunmehr beschrieben wird.

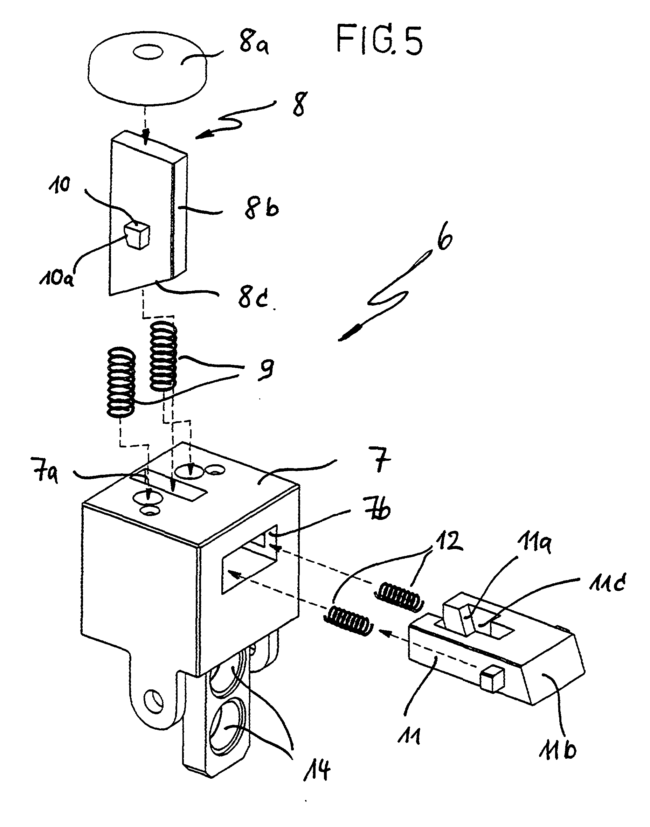

Dieses Komfort-Entriegelungssystem, dessen innerer Aufbau insbesondere die Figur 5 zeigt, besteht aus einem Gehäuse 7, mit einer ersten Öffnung 7a, in der eine Drucktaste 8 mit einem pilzförmigen Tastenkopf 8a und einem Schaft 8b gegen die Kraft von Tasten-Druckfedern 9 vertikal verschiebbar gehaltert ist. Ferner ist am Schaft 8b, der eine untere Schräge 8c aufweist, auf beiden Seiten eine Mitnehmernocke 10 fest angebracht, die ebenfalls eine Schräge 10a aufweist. In dem Gehäuse 7 ist ferner eine zweite, horizontale Öffnung 7b ausgebildet, in der ein Sperrschieber 11 gegen die Vorspannkraft von Schieber-Druckfedern 12 verschiebbar gehaltert ist. Der Sperrschieber 11 weist innerhalb einer Öffnung 11c für den Durchgang des Schaftes 8b eine erste Schräge 11a für ein Zusammenwirken mit der Schräge 10a an den Mitnehmernocken 10 der Drucktaste 8 sowie eine zweite Schräge 11b für ein Zusammenwirken mit einer Schräge 13a an einem Auslösekeil 13, der am Überrollbügel 2 angebracht ist, auf.

Das Gehäuse 7 besitzt ferner Ausnehmungen 14 zur Aufnahme der Klinkenfedern 5.

Dieses Komfort-Entriegelungssystem arbeitet wie folgt:

In Figur 1 ist der Überrollbügel 2 in der ausgefahrenen Stellung dargestellt. Er soll nunmehr manuell in die Ausgangslage nach unten zurückgeschoben werden. Zu diesem Zweck wird die Drucktaste 8 durch Betätigen des Tastenkopfes 8a gegen die Druckfedern 9 herabgedrückt. Die Schräge 8c am Drucktastenschaft 8b kommt dabei in Wirkeingriff mit dem oberen Ende des Rast- bzw. Schwenkhebels 4b und verschwenkt damit die Rastklinke 4 unter Aufhebung der Verklinkung im Uhrzeigersinn. Gleichzeitig wird der Sperrschieber 11 gegen die Kraft der Druckfedern 12 durch den Wirkeingriff der Schräge 10a an den Mitnehmernocken 10 der Drucktaste 8 mit der Schräge 11a im Sperrschieber 11 nach links zurückgezogen. Wenn die Drucktaste 8, d.h. ihr Schaft 8b, dabei ihre unterste Endstellung erreicht hat, geben die Mitnehmernocken 10 den Sperrschieber 11 wieder frei, der sich aufgrund der Vorspannkraft der Druckfedern 12 wieder nach recht in die Ausgangslage bewegt.

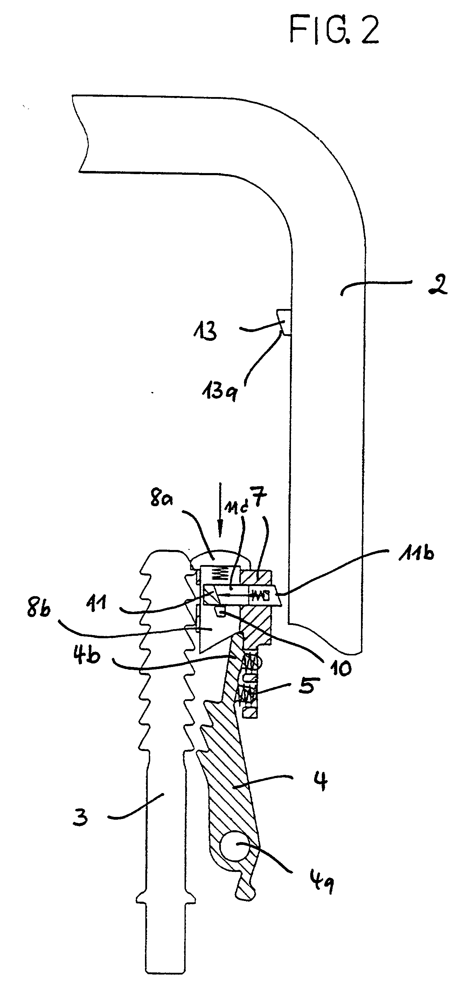

Die Mitnehmernocken 10 kommen dadurch positionsmäßig unter den vorderen Teil des Sperrschiebers 11 und halten daher die Drucktaste 8 auch nach Wegnahme der manuellen Betätigungskraft im gedrückten Zustand, da die Druckfedern 9 den Schaft 8b der Drucktaste nicht nach oben bewegen können. Dieser Zustand der Selbsthaltung der Drucktaste ist in der Figur 2 dargestellt, wobei durch die Selbsthaltung der Drucktaste auch die Rastklinke 4 entriegelt bleibt.

Dadurch kann der Überrollbügel 2 mit beiden Händen auf einfache Weise eingeschoben werden, ohne daß eine andere Funktion betätigt werden müßte.

Kurz vor dem Erreichen seiner unteren Endstellung betätigt der am Überrollbügel 2 befestigte Auslösekeil 13 mit seiner Schräge 13a die Schräge 11b des Sperrschiebers 11, und drückt diesen damit gegen die Kraft der Druckfedern 12 nach links. Dadurch liegen die Mitnehmernocken 10 am Drucktasten-Schaft 8b wieder innerhalb der Öffnung 11 im Sperrschieber.

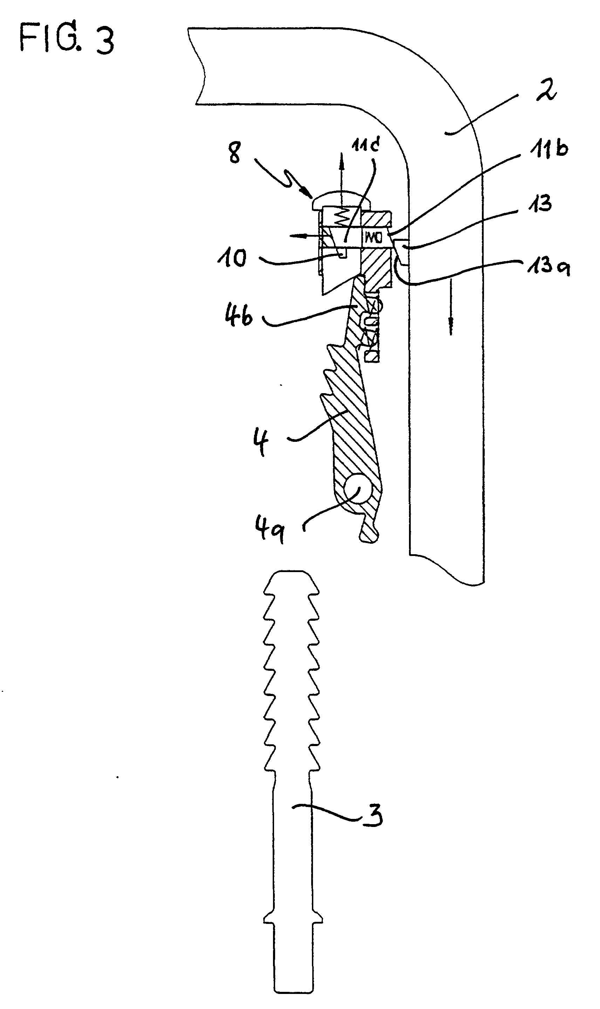

Dieser Zustand ist in der Figur 3 dargestellt.

Die Druckfedern 9 können nunmehr die freigegebene Drucktaste 8 wieder nach oben bewegen und der Schwenkhebel 4b kommt frei, wodurch ihn die Druckfedern 5 wieder - gegen den Uhrzeigersinn - in die verriegelnde Position verschwenken. Das Überroll-Schutzsystem ist dann wieder funktionsbereit.

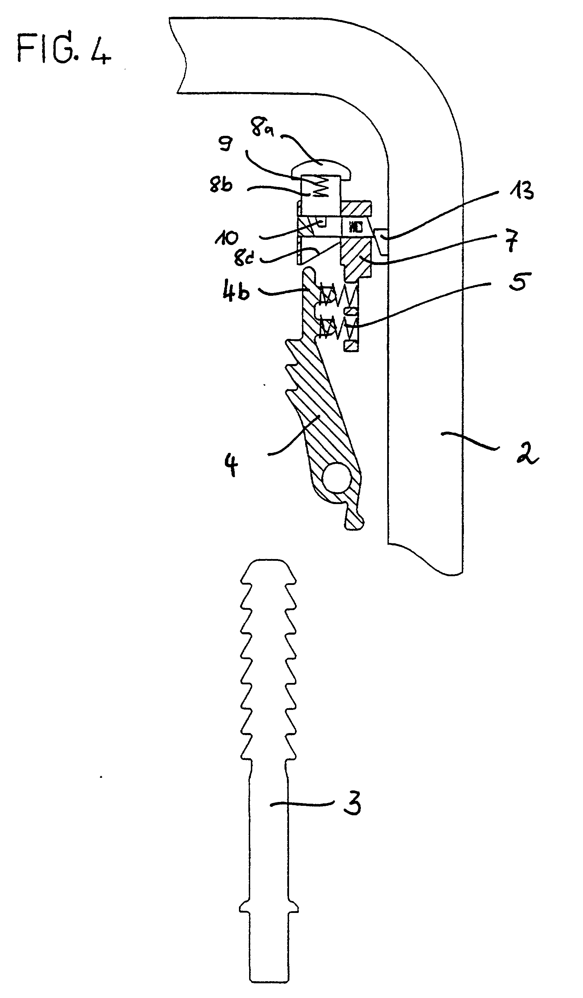

Dieser Zustand ist in der Figur 4 dargestellt.

Die beschriebene Selbsthalteanordnung ist ein bevorzugtes Ausführungsbeispiel. Es können auch andere Systeme, die eine Selbsthaltung eines Betätigungsgliedes unter Aufrechterhaltung der Entklinkung der Rastklinke erzeugen, Anwendung finden.

## Patentansprüche

1. Überroll-Schutzvorrichtung für Kraftfahrzeuge, mit einem im Überschlagfall ausfahrbaren Überrollkörper (2) und einer Verklinkung (1) zum Halten der ausgefahrenen Position, die ein drehbar angelenktes federvorgespanntes Verklinkungselement (4) mit einem Glied (4b) für ein manuelles Lösen der Verklinkung (1) aufweist, und mit einer manuell betätigbaren, mit einem Selbsthaltemechanismus (10, 11) ausgebildeten Tastenanordnung (8), die in Wirkeingriffmit dem Glied (4b) am Verklinkungselement (4) bringbar ist, derart, daß sie die Verklinkung in Selbsthaltung löst, wobei am Überrollkörper (2) ein Betätigungselement (13) zum Aufheben der Selbsthaltung bei einer vorgegebenen unteren Stellung des Überrollkörpers (2) angebracht ist, **dadurch gekennzeichnet, daß** die Tastenanordnung eine in einem Gehäuse (7) betrieblich vertikal, federvorgespannt geführte Drucktaste (8) mit einem länglichen Schaft (8b) aufweist, der in Wirkeingriff mit dem entriegelnden Glied (4b) am Verklinkungselement (4) bringbar und an dem eine Nocke (10) angebracht ist, und daß der Selbsthaltemechanismus einen horizontal in dem Gehäuse (7) federvorgespannt, verschiebbaren Sperrschieber (11) mit einer Durchtrittsöffnung (11c) für den Schaft (8b) der Drucktaste (8) und der daran angebrachten Nocke (10) sowie mit entsprechenden Betätigungsschrägen (11 a) aufweist, derart, daß beim vertikalen Herunterdrücken der Drucktaste (8) die Nocke (10) mittels einer Schräge (10a) den Sperrschieber (11) gegen die Federvorspannung verschiebt, bis die Nocke unterhalb des Sperrschiebers (11) gelangt und diesen damit wieder unter Ausbildung einer Selbsthaltung der Drucktaste (8) freigibt.

2. Überroll-Schutzvorrichtung nach Anspruch 1, **dadurch gekennzeichnet, daß** am Sperrschieber (11) eine äußere Schräge (11b) ausgebildet ist für den Wirkeingriff mit einer Schräge (13a) am Betätigungselement (13) am Überrollkörper (2) für die Aufhebung der Selbsthaltung.

3. Überroll-Schutzvorrichtung nach Anspruch 1 oder 2, **dadurch gekennzeichnet, daß** das untere Ende des Schaftes (8b) der Drucktaste (8) eine Schräge (8c) für den Wirkeingriff mit dem Glied (4b) des Verklinkungselementes, das als Entsperrhebel ausgebildet ist, aufweist.

4. Überroll-Schutzvorrichtung nach einem der Ansprüche 1 bis 3, **dadurch gekennzeichnet, daß** zwei Druckfedern (9) für die Vorspannung der Drucktaste (8) und zwei Druckfedern (12) für die Vorspannung der Sperrklinke (11) vorgesehen sind.

5. Überroll-Schutzvorrichtung nach einem der Ansprüche 1 bis 4, **dadurch gekennzeichnet**, da das Betätigungselement (13) am Überrollkörper (2) keilförmig ausgebildet ist.

## Claims

1. Rollover protection device for motor vehicles, having a rollover body (2) which is extensible in the event of a rollover and a latching mechanism (1) for arresting the extended position, which latching mechanism (1) has a rotatably coupled spring-biased latching element (4) with a member (4b) for manual disengagement of the latching mechanism (1), and having a manually operable button arrangement (8) which is constructed with a self-arresting mechanism (10, 11) and can be brought into operative engagement with the member (4b) on the latching element (4) in such a manner that it releases the latching mechanism into self-arrest, an operating element (13) for cancelling the self-arrest at a predetermined lower position of the rollover body (2) being mounted on the rollover body (2), **characterised in that** the button arrangement has a push-button (8) which is guided operationally vertically and under spring bias in a housing (7) and has an elongate shank (8b) which can be brought into operative engagement with the unlocking member (4b) on the latching element (4) and on which a cam (10) is mounted, and the self-arresting mechanism has a blocking slider (11) which is horizontally displaceable in the housing (7) under spring bias and has a passage (1 1c) for the shank (8b) of the push-button (8) and the cam (10) mounted thereon and also has corresponding operating slopes (11a) in such a manner that, when the push-button (8) is pushed down vertically, the cam (10) displaces the blocking slider (11) against the spring bias by means of a slope (10a) until the cam arrives beneath the blocking slider (11) and thereby releases the latter again to provide a self-arrest of the push-button (8).

2. Rollover protection device according to claim 1, **characterised in that** an outer slope (11b) is formed on the blocking slider (11) for operative engagement with a slope (13a) on the operating element (13) on the rollover body (2) for cancellation of the self-arrest.

3. Rollover protection device according to claim 1 or 2, **characterised in that** the lower end of the shank (8b) of the push-button (8) has a slope (8c) for operative engagement with the latching element member (4b) which is in the form of an unlocking lever.

4. Rollover protection device according to any one of claims 1 to 3, **characterised in that** two compression springs (9) for biasing the push-button (8) and two compression springs (12) for biasing the pawl (11) are provided.

5. Rollover protection device according to any one of claims 1 to 4, **characterised in that** the operating element (13) on the rollover body (2) is wedge-shaped.

## Revendications

1. Dispositif de protection à capote pour des véhicules automobiles, avec un corps de capote (2) pouvant être sorti en cas tonneau et un encliquetage (1) destiné à maintenir la position sortie, qui comprend un élément d'encliquetage (4) avec un ressort précontraint articulé de façon rotative avec un élément (4b) pour un desserrage manuel de l'encliquetage (1), et avec un agencement de touche (8) actionnable manuellement, conçu avec un mécanisme de verrouillage (10, 11), lequel agencement peut être amené en mise en prise fonctionnelle avec l'élément (4b) sur l'élément d'encliquetage (4), de telle sorte qu'il desserre l'encliquetage en verrouillage, un élément d'actionnement (13) étant aménagé sur le corps de capote (2) pour lever le verrouillage dans une position inférieure prédéterminée du corps de capote (2), **caractérisé en ce que** l'agencement de touche comprend une touche de pression (8) guidée avec un ressort précontraint, verticalement de façon opérationnelle dans un logement (7), avec une tige longitudinale (8b) qui peut être amenée en mise en prise fonctionnelle avec l'élément de déverrouillage (4b) sur l'élément d'encliquetage (4) et sur laquelle est aménagé un taquet (10), et **en ce que** le mécanisme de verrouillage comprend un piston oscillant (11) mobile, avec un ressort précontraint horizontalement dans le logement (7), avec une ouverture de passage (11c) pour la tige (8b) du bouton de pression (8) et du taquet (10) aménagé sur celui-ci ainsi qu'avec des inclinaisons d'actionnement (11a) correspondantes, de telle sorte qu'à l'occasion de l'abaissement vertical du bouton de pression (8), le taquet (10) déplace, au moyen d'une inclinaison (10a), le piston oscillant (11) à l'encontre de la précontrainte du ressort, jusqu'à ce que le taquet parvienne au-dessous du piston oscillant (11) et libère celui-ci de ce fait en formant un verrouillage du bouton de pression (8).

2. Dispositif de protection à capote selon la revendication 1, **caractérisé en ce qu'**une inclinaison extérieure (11b) est conçue sur le piston oscillant (11) pour la mise en prise fonctionnelle avec une inclinaison (13a) sur l'élément d'actionnement (13) sur le corps de capote (2) pour la levée du verrouillage.

3. Dispositif de protection à capote selon la revendication 1 ou 2, **caractérisé en ce que** l'extrémité inférieure de la tige (8b) du bouton de pression (8) comprend une inclinaison (8c) pour la mise en prise fonctionnelle avec l'élément (4b) de l'élément d'encliquetage, qui est conçu comme un levier de déverrouillage.

4. Dispositif de protection à capote selon l'une des revendications 1 à 3, **caractérisé en ce que** deux ressorts de pression (9) sont prévus pour la précontrainte du bouton de pression (8) et deux ressorts de pression (12) pour la précontrainte du cliquet d'arrêt (11).

5. Dispositif de protection à capote selon l'une des revendications 1 à 4, **caractérisé en ce que** l'élément d'actionnement (13) est conçu de façon cunéiforme sur le corps de capote (2).
